## Europäisches Patentamt
## European Patent Office
## Office européen des brevets

(19)

(11) Publication number: **0 009 689**
**B1**

(12) **EUROPEAN PATENT SPECIFICATION**

(45) Date of publication of patent specification: **11.08.82**

(51) Int. Cl.³: **C 08 F 14/08,** C 08 F 2/22, C 08 J 3/08

(21) Application number: **79103447.3**

(22) Date of filing: **14.09.79**

(54) **Process for preparing a crystalline vinylidene chloride polymer powder, and compositions comprising it.**

(30) Priority: **15.09.78 US 942514**

(43) Date of publication of application:
**16.04.80 Bulletin 80/8**

(45) Publication of the grant of the patent:
**11.08.82 Bulletin 82/32**

(84) Designated Contracting States:
**BE DE FR GB IT NL**

(56) References cited:
**FR - A - 1 478 438**
**FR - A - 2 040 326**
**FR - E - 93 606**
**GB - A - 1 025 914**
**US - A - 3 057 752**

**CHEMICAL ABSTRACTS, vol. 82, no. 16, April 21, 1975, page 152, ref. 100242s Columbus, Ohio, US**

(73) Proprietor: **THE DOW CHEMICAL COMPANY**
**Dow Center 2030 Abbott Road Post Office Box 1967**
**Midland Michigan 48640 (US)**

(72) Inventor: **Gibbs, Dale Sabin**
**2607 Mt. Vernon**
**Midland Michigan (US)**
Inventor: **Benson, Jack Howard**
**2813 Blairmont**
**Midland Michigan (US)**
Inventor: **Fernandez, Reet T.**
**5614 Evergreen**
**Midland Michigan (US)**

(74) Representative: **Weickmann, Heinrich, Dipl.-Ing. et al,**
**Patentanwälte Dipl.-Ing. H. Weickmann Dipl.-Phys.Dr. K. Fincke Dipl.-Ing. F.A. Weickmann Dipl.-Chem. B. Huber Dr.-Ing. H. Liska**
**Möhlstrasse 22**
**D-8000 München 86 (DE)**

Process for preparing a crystalline vinylidene chloride polymer powder, and compositions comprising it

The present invention relates to vinylidene chloride polymers and, more particularly, to vinylidene chloride polymers which are dispersible in non-solvents for such polymers.

This invention provides vinylidene chloride polymer powders that can be dispersed in a non-solvent organic liquid for vinylidene chloride polymers and thereafter used to prepare polymeric materials having enhanced physical properties.

More specifically, the present invention provides a vinylidene chloride polymer powder, high in chlorine content, that can be dispersed in a polyol used to prepare polyurethane foam materials.

From US 3 057 752 it is known to age aqueous dispersions of vinylidene chloride copolymers prior to coating base sheets, in order to reduce surface tack of the coating.

GB 1 025 914 describes a polyurethane resin foam of low K-factor, having dispersed therein a polymer or copolymer of e.g. vinylidene chloride.

In one aspect, this invention provides a process for preparing a crystalline vinylidene chloride polymer powder which is dispersible in liquid organic reactants used in the preparation of polymeric materials, which comprises emulsion polymerizing of from 80 to 100 parts by weight of vinylidene chloride and 20 to 0 parts by weight of at least one copolymerizable ethylenically unsaturated monomer to prepare a latex wherein the latex particles have a diameter of less than 1 $\mu$m, aging the resulting latex until at least 75 percent of the latex particles are crystallized, and then recovering the polymer from the latex.

In another aspect, the present invention resides in the resulting crystalline vinylidene chloride polymer powder and a new composition of matter which comprises the resultant vinylidene chloride polymer powder dispersed in a liquid organic reactant which is used in the preparation of polymeric materials, such as a polyol used in the preparation of polyurethane materials.

Crystallizable vinylidene chloride polymers in accordance with the present invention include the homopolymer and copolymers of vinylidene chloride with at least one copolymerizable ethylenically unsaturated comonomer. Exemplary comonomers which can be utilized in the present invention include ethylenically unsaturated carboxylic acids, nitriles of ethylenically unsaturated carboxylic acids such as acrylonitrile and methacrylonitrile; alkyl esters of acrylic and methacrylic acids such as methyl acrylate and methyl methacrylate; hydroxyalkyl esters of acrylic and methacrylic acids such as hydroxypropyl acrylate, hydroxyethyl acrylate, and hydroxybutyl acrylate; vinyl esters of saturated carboxylic acids such as vinyl acetate; amides of ethylenically unsaturated carboxylic acids such as acrylamide acid; ethylenically unsaturated alcohols such as allyl alcohol; vinyl halides such as vinyl chloride; and other ethylenically unsaturated monomers known to polymerize with vinylidene chloride. Of these, methyl acrylate is the preferred comonomer. A preferred embodiment of the process according to the invention comprises emulsion polymerizing from 94 to 97 parts by weight of vinylidene chloride with from 6 to 3 parts by weight of methyl acrylate.

In order to obtain a crystallizable particle, the amount of vinylidene chloride in the polymer will vary with the particular comonomer used. In general, the tendency for the latex particles to crystallize while still in emulsion will increase with decreasing molecular weight, with increasing particle size, with increasing temperature during aging of the latex, or with increasing vinylidene chloride content. Typically, a sharp crystallization break point at a specific comonomer concentration can be identified for each comonomer used. If the level of comonomer is increased beyond the break point, the crystallization induction time increases exponentially and the tendency for the particles in the latex to crystallize decreases exponentially. For example, at a polymer composition of 92 weight percent vinylidene chloride and 8 weight percent methyl acrylate the tendency for latex particles having a size of about 120 nm and relative viscosity of about 1.5 to crystallize is so low that the latex can be held at the optimum temperature for crystallization (80°C) for six hours and subsequently cooled with essentially no crystallization occurring in the particles. On the other hand, similar polymer particles having a composition of 93 weight percent vinylidene chloride and 7 weight percent methyl acrylate will crystallize under the same conditions. However, the polymers of vinylidene chloride and methyl acrylate constitute a very special case inasmuch as the rate of reaction for the two monomers is nearly identical and very little composition drift occurs during polymerization. In contrast, a sharp crystallization break point is not as readily identified for polymerizable mixtures wherein the comonomer enters the polymer at a rate slower or faster than vinylidene chloride. In conventional batch emulsion polymerization the crystallization break point for a particular polymerization mixture can nevertheless be identified without extensive experimentation. In continuous feed polymerization, however, the crystallization break point for a monomer mixture in which the comonomer has a faster reaction rate than vinylidene chloride will be harder to determine and will vary with the composition drift occurring both in the seed latex reaction, if used, and in the ultimate polymer particle reaction. In a preferred embodiment of the invention the latex particles are crystallized within the aging period of seven days at 25° to 30°C.

The crystallizable vinylidene chloride polymers of the present invention are prepared by polymerization in an aqueous emulsion according to processes well known in the art. Preferably, the polymerization is carried out by essentially continuous, carefully controlled addition of the requisite

2

polymerization constituents (including polymerization initiator systems if desired) to the aqueous medium.

Generally, it is preferred to start the polymerization by adding a small amount of the monomeric material to the aqueous medium and then adding the desired polymerization initiator to form a polymeric seed latex to aid in the control of particle size. The aqueous medium in which the seed latex is formed will contain the necessary surfactants to form the emulsion and will generally be adjusted to the desired pH value, as is well known in the art. Following the formation of the seed latex, the remaining amount of monomeric material is continuously added under carefully controlled conditions to the aqueous medium.

In view of the fact that amine catalysts are typically used in the preparation of polyurethane foam materials to control the rate of urea and urethane reactions and that the urethane reactions are significantly exothermic, the vinylidene chloride polymers of the present invention could have a tendency to degrade and produce hydrogen chloride when used in such applications. The accelerated evolution of hydrogen chloride caused by such degradation could not only result in discoloration of the vinylidene chloride polymer and the resultant polyurethane foam material, but could also alter the kinetics of the urethane reaction.

It has been found that a moderate decrease in the propensity of the vinylidene chloride polymer to discolor when exposed to the conditions of the polyurethane foam reaction and similar deleterious environments can be achieved by sequentially polymerizing such polymers with a monomer mixture comprising an ethylenically unsaturated non-vinylidene chloride monomer. It is believed that the sequential polymerization provides a thin cap on the vinylidene chloride polymer particles which protects them from the amine catalyst, thereby reducing the rate of decomposition.

The sequential polymerization can be carried out in a conventional manner by adding an effective degradation reducing amount up to 20 percent by weight of the vinylidene chloride polymer, preferably from 5 to 10 percent by weight, of the desired monomer mixture (including emulsifiers and initiators as needed) to the vinylidene chloride polymer latex and subjecting the monomer mixture to polymerization conditions. In a preferred mode, the desired monomer mixture for sequential polymerization is not added to the latex until it is certain that essentially all of the residual vinylidene chloride monomer has been depleted. Depletion of residual vinylidene chloride monomer can be accomplished, for example, by adding an additional amount of initiator or a minor amount of methyl acrylate to the polymerization vessel subsequent to the apparent completion of the vinylidene chloride polymer reaction, but prior to the addition of the sequentially polymerizable monomer mixture. In this manner, the possibility of including vinylidene chloride in the resultant non-vinylidene chloride polymer "cap" will be reduced.

In order to provide adequate dispersibility, the non-vinylidene chloride polymer "cap" should either be uncrosslinked and have a second order transition termperature greater than 60°C, preferably greater than 65°C, or it should be crosslinked. If the "cap" is crosslinked, i.e., by copolymerizing a minor mount of a crosslinking polyfunctional comonomer with the desired ethylenically unsaturated non-vinylidene chloride monomer or monomers, the second order transition temperature requirement is not as critical, though values within the aforementioned range are preferred.

Exemplary ethylenically unsaturated non-vinylidene chloride monomers which can be used in the sequential polymerization reaction to prepare the "cap" polymer include the alkyl esters of methacrylic acid such as methyl methacrylate; the vinyl aromatic monomers such as styrene and vinyl toluene; and other sequentially polymerizable monomers, i.e., those which are capable of producing a "cap" satisfying the aforementioned criteria.

Exemplary copolymerizable crosslinking polyfunctional comonomers which can be polymerized with the ethylenically unsaturated non-vinylidene chloride monomers include 1,3-butylene glycol diacrylate, 1,4-butane diol diacrylate, allyl acrylate, vinyl acrylate, 1,3-butylene glycol dimethacrylate, 1,4-butane diol dimethacrylate, allyl methacrylate, and vinyl methacrylate. The amount of crosslinking monomer required for dispersibility will depend upon the efficiency of the particular crosslinking monomer chosen, as well as the ethylenically unsaturated monomer or monomers with which it is polymerized. Generally the amount of crosslinking monomer used, if any, will be less than 6 percent of the weight of the sequentially polymerizable monomer mixture.

The diameter of the resulting latex particles, which includes those which have been "capped" by sequential polymerization as well as those which have not been "capped" should be less than one μm. Preferably, the mean particle diameter is in the range of 0.05 to 0.5 μm, most preferably in the range of 0.1 to 0.3 μm, with substantially all of the particles having a diameter in that range. The preferred ranges are especailly applicable if the powders obtained therefrom are to be used in the preparation of polyurethane foam materials. Larger latex particles will produce less discoloration in polyurethane foam materials, but smaller particles have longer dispersion stability in the polyol starting material and also provide better load-bearing properties in the foam material. Accordingly, the preferred range represents those sizes which will give the best overall balance of properties when used in the preparation of polyurethane foam material.

In order to achieve satisfactory dispersions of the vinylidene chloride polymer powders in non-solvents for vinylidene chloride polymers according to the present invention, it is necessary that substantially all of the latex particles are crystallized before they are recovered from the latex. It should

3

be pointed out that the ultimate degree of crystallinity within each latex particle is not as important as the number of particles which are crystallized. According to the invention, from 75 to 100 percent of the latex particles will be crystallized prior to recovery, and preferably between 85 and 95 percent. The percent of particles crystallized is determined by a physical count where the crystalline particles are seen in an electron micrograph as sharp black spheres while amorphous particles are flattened out, are not in focus and are much lighter.

It has been found that those latex particles which have been "capped" with an ethylenically unsaturated non-vinylidene chloride monomer that is highly reactive with vinylidene chloride, e.g., methyl methacrylate, have a reduced tendency to crystallize as compared to similar latex particles which have not been "capped" or which have been "capped" with a monomer that is not as highly reactive with vinylidene chloride, e.g., styrene. Accordingly, in those instances where the tendency of the "capped" latex particle to crystallize will be reduced to an undesirable level, it is advantageous to permit the intermediate vinylidene chloride polymer latex particles to crystallize before they are subjected to the sequential polymerization reaction.

The crystalline vinylidene chloride polymer powders of the present invention are recovered from the aforementioned latices by conventional techniques, preferably by coagulating the latex and then washing and drying the coagulum or by spray drying the latex to produce a fine powder. The optimum temperature for coagulation will vary depending upon the type and amount of comonomer employed in preparing the vinylidene chloride polymer and particularly upon the second order transition temperature of the resultant polymer. Generally, the coagulation temperature will be in the range of 50° to 95°C, preferably from 50° to 80°C.

It is necessary that the vinylidene chloride polymer powders of the present invention be dispersible in non-solvents for vinylidene chloride polymers. For purposes of the present invention, "dispersibility" is measured under the following conditions: 20 weight percent of the desired powder is mixed with a polyol having a room temperature viscosity of 900 to 1000 mPa.s, and the mixture is passed once through a Gifford-Wood colloid mill operating at 10,000 rpm with a gap setting 0.1 mm (0.004 inch) and then twice through a Gaulin homogenizer operating at 350 kg/sq.cm (5000 psi). Under such conditions, substantially all of a powder suitable for use in the present invention will break down in the polyol and regenerate the original latex particles. Essentially all of the powder particles which do not break down to the latex particle size, if any, should be of a size less than 100 $\mu$m. Preferably at least 40 percent of the powder particles break down to the original latex particle size.

Liquid organic reactants which are used in the preparation of polymeric materials are non-solvents for vinylidene chloride polymers. In particular they include polyols, which are used in the preparation of polyurethane materials; dihydroxy alcohols, which are used in the preparation of polyester resins; and the like. In all cases, the novel crystalline vinylidene chloride polymer powders of the present invention are suitably employed to render the resulting polymeric materials more resistant to ignition and burning while generally retaining and/or improving other beneficial physical properties.

Conventional vinylidene chloride polymer powders can, in some instances, be blended directly with a suitable thermoplastic polymer to produce a satisfactory product (cf. GB—PS 1 025 914). However, the crystalline powders of the present invention are advantageously incorporated into a polymer product by dispersing the powder in the desired non-solvent liquid reactant with moderate shear and thereafter carrying out the contemplated polymerization reaction. The latter method is critically employed in the preparation of many foamed polymeric products, particularly in the preparation of foamed polyurethane materials.

The use of the crystalline vinylidene chloride polymer powders in the preparation of polymeric materials having enhanced physical properties will now be described by way of example with respect to the preparation of polyurethane materials—which may or may not be foamed. Polyurethane materials are prepared according to the methods well known in the art by reacting a polyfunctional isocyanate with a polyfunctional chemical compound having an active hydrogen in its structure such as a polyester, polyesteramide or polyether or mixture of two or more of such materials. The latter component is generally referred to as the "active hydrogen-containing material" and is typically sufficiently liquid to permit mixing and reaction with the polyfunctional isocyanate in producing the polyurethane. The active hydrogen-containing materials conventionally used contain hydroxyl groups as the radicals having the active hydrogen and thus are generally termed "polyols". In addition, other hydroxyl-capped polymers useful as the polyol in preparing polyurethane resins include polyformals; the hydroxyl-terminated lactone polyesters; and alkylene oxide adducts of the alkyl alcohol-styrene polymers. For reasons of commercial availability and cost, it is conventional to use polyethers having hydroxyl-terminated chains in the preparation of polyurethane foams and either such polyethers or hydroxyl-terminated polyesters in preparing vulcanizable gum, adhesive, films, etc. The polyurethane end products may occasionally be crosslinked to some extent by including with the polyol (which is generally di- or polyfunctional) a small amount of polyfunctional cross-linking agent.

The active hydrogen-containing materials suitable for use in the preparation of polyurethane materials are any of those known in the art and (1) which form stable and uniform dispersions with the crystalline vinylidene chloride polymer powders, which dispersions are preferably dilutable without the formation of undesirable precipitates with other components used to form the polyurethane; (2) which

4

are liquids, at least at the temperatures used for preparing the dispersions and for the reaction with the polyisocyanate; and (3) which have at least two radicals reactive with the isocyanato radicals of the polyisocyanate so as to form a polymeric reaction product. The preferred active hydrogen-containing materials are the polyols having the aforementioned properties.

The polyols employed can have hydroxyl numbers which vary over a wide range. The exact polyol employed depends, among other things, upon the end use of the polyurethane product to be produced. For example, in the case of foamed reaction products, the molecular weight of the hydroxyl number is selected to result in flexible, semi-flexible, or rigid foams. In such applications, the polyols preferably possess a hydroxyl number of from 200 to 1000 when employed in rigid foam formulations, from 50 to 150 for semiflexible foams, and from 20 to 70 or more when employed in flexible foam formations.

The crystalline vinylidene chloride polymer powders are preferably incorporated into polyurethanes by first forming a dispersion of the powder in the desired polyol. Generally, the resulting dispersions should have a viscosity low enough to permit ready mixing with additional quantities of polyol used, if any, and with the other components of the polyurethane reaction. Furthermore, the resulting dispersions should be at least sufficiently stable to prevent sedimentation during the period required to carry out the polyurethane reaction. If the dispersions are to be prepared and then stored prior to use, they should be stable for a much longer period of time, e.g., usually at least three months. Generally, the dispersions of the present invention demonstrate such long-term stability requirements, particularly those dispersions containing the smaller vinylidene chloride polymer powder particles.

The polymer powder/polyol dispersions of the present invention may be used in place of the polyols of the prior art in any of the processes used in preparing polyurethanes. Thus, the dispersions may be used in the prepolymer process, the quasi-prepolymer process or the one-shot process. The polyurethanes may be further reacted with epoxy resins, cured with sulfur, peroxides or other curing agents, or otherwise reacted or modified as known to those skilled in the art.

Referring now to the use of the present crystalline vinylidene chloride polymer powders in the preparation of polymeric products in general, the amount of powder which will be incorporated into a desired polymeric material will depend upon the particular vinylidene chloride polymer powder used and upon the degree to which it is desired to enhance flame-retardancy and/or other beneficial physical properties in the resulting polymeric materials, as well as other technical and economic considerations. The resulting polymeric materials will generally contain an amount of the polymer powder which effectively enhances the physical properties thereof. This amount generally ranges from 2 to 50 weight percent of crystalline vinylidene chloride polymer powder, preferably from 3 to 30 percent. Accordingly, the amount of powder dispersed in the non-solvent will be adjusted to produce such results.

The resulting polymeric materials may be prepared so as to contain further modifying ingredients such as heat and light stabilizers, pigments, conventional flame-retardant synergists, and so forth, as necessary or desired for particular applications.

With respect to polyurethane foam materials, in particular, surfactants or emulsifiers are frequently used to provide the necessary cell formation and growth for optimum processability. However, polyurethane foam materials prepared from polyols containing crystalline vinylidene chloride polymer powders in accordance with the present invention do not generally require the use of such surfactants or emulsifiers. Nevertheless, such surfactants or emulsifiers may be advantageously employed especially when using powders prepared from the larger-sized crystalline vinylidene chloride polymer particles inasmuch as such particles have a reduced tendency to improve cell size in the polyurethane foam material. A user can, with only minimal experimentation, determine when such a surfactant or emulsifier will provide improved results.

The crystalline vinylidene chloride polymer powders of the present invention can be moderately stabilized in an environment of high temperature and/or basic compounds, e.g., that environment encountered in preparing polyurethane foam materials, by sequential polymerization with non-vinylidene chloride monomers. Alternatively, or in addition thereto, conventional stabilizers for vinylidene chloride polymers, such as the hindered phenolic antioxidants and the like, may also be employed. Marginal improvement in the color of a polyurethane foam material is achieved by using epoxy stabilizers. Accordingly, it may be necessary for a user to determine by simple preliminary experimentation these stabilizers which will be suitably employed with the crystalline vinylidene chloride polymer powders. Suitable stabilizers are preferably used by adding them to the aqueous medium prior to or during the emulsion polymerization of the vinylidene chloride polymer.

The following specific examples further illustrate the invention. Parts and percentages are by weight unless otherwise indicated.

Example 1

The following recipe and technique were used to prepare a crystalline vinylidene chloride polymer powder which is dispersible in polyols and other non-solvents for vinylidene chloride polymers:

Initial water phase

2000 g distilled water

16.56 g dihexyl sodium sulfosuccinate emulsifier (80% active)

10.6 g sodium persulfate

Emulsifier feed stream
    176.66 g $C_{12}H_{25}C_{12}H_7O(SO_3Na)_2$ emulsifier (45% active) in 1000 g aqueous solution
    Used 500 g in 12 hours (feed rate=42 g/hr)

Seed latex monomer
    25 g methyl acrylate (MA)
    475 g vinylidene chloride (VDC)
    Used 150 g in seed latex reaction

Mixed monomers
    200 g MA
    3800 g VDC
    Used 2500 g in 12 hours (feed rate=208 g/hr)

The initial water phase was introduced into a 2-gallon (7.6 liter) reactor and placed under a vacuum of about 25 inches (63.5 cm) Hg for 10 minutes while being heated to 52°C. While agitating the contents of the reactor at 100 rpm, the vacuum was then shut off and 150 g of seed latex monomer was introduced. After the seed latex reaction had proceeded to approximately a 2 psi (0.141 kg/sq cm) pressure drop from the maximum pressure achieved, introduction of the mixed monomers at 208 g/hr was begun and continued for 12 hours while concurrently adding the emulsifier stream at a rate of 42 g/hr. At the end of that period, the mixed monomer and emulsifier streams were shut off and a 2 percent solution of sodium bisulfite was added at a rate of 40 g/hr for 1.5 hours to complete the reaction.

The resultant latex, containing a polymer comprising about 95 percent VDC and 5 percent MA, was aged for five days (85 percent of the latex particles were crystalline) at room temperature and then recovered by the following technique: 30 ml of 32 percent calcium chloride was added to 800 ml of water and heated to 50°C with vigorous stirring. The latex was then added slowly while continuing the vigorous agitation. As soon as some growth of coagulated particles was observed, the mixture was cooled as rapidly as possible and the coagulum collected in a centrifuge. The coagulum was washed 10 minutes with a water spray and then allowed to dry in a tray at room temperature.

200 Grams of the resulting dried powder was mixed with 800 g polyether polyol having a MW of 4700, hydroxyl number 31.7—36.3 and triol functionality using a spatula. Thereafter, the mixture was continuously recycled through a Gifford-Wood colloid mill, operating at a speed of 10,000 rpm with a clearance of 0.004 inch (0.1 mm), for five minutes. The so-formed dispersion was examined by microscopy and many of the original latex particles having a size of 0.2 $\mu$m were observed. None of the examined particles had a size greater than about 100 $\mu$m.

Example 2
The following alternate recipe and technique were used to prepare a vinylidene chloride polymer powder much like that of Example 1:

Initial water phase
    2500 g distilled water
    16.56 g dihexyl sodium sulfosuccinate 80 emulsifier (80 percent active)
    10.6 g sodium persulate
    19.88 g itaconic acid

Seed latex monomer
    25 g MA
    475 g VDC
    Used 150 g in seed latex reaction

Mixed monomers
    200 g MA
    3800 g VDC
    Used 2500 g in 12 hours (feed rate=208 g/hr)

The initial water phase was introduced into a 2-gallon (7.6 liter) reactor and placed under a vacuum of about 25 inches (63.5 cm) Hg for 10 minutes while being heated to 45°C with agitation at 120 rpm. When the reactor contents had reached a temperature of 45°C, the vacuum was shut off and 150 g seed latex monomer was added. After the seed latex reaction had proceeded to a 2 psi (0.141 kg/sq cm) pressure drop from maximum pressure achieved, the mixed monomer stream was introduced at 208 g/hr and continued for 12 hours. At the end of that period, the mixed monomer stream was shut off and a 2 percent solution of sodium bisulfite was added at 40 g/hr for two hours to complete the reaction.

The resulting latex, containing a polymer comprising about 95 percent VDC and 5 percent MA, was aged for about four days (80 percent of the latex particles crystallized) to permit the latex particles to crystallize and then coagulated by slowly adding 300 ml of latex to a vigorously agitated solution of 35 ml of calcium chloride in 960 ml water maintained at a temperature of 50°C. As soon as coagulum was observed, the mixture was quickly quenched in ice. The coagulum was then collected in a centrifuge, washed with water for 10 minutes, and then tray dried at room temperature.

200 Grams of the dried vinylidene chloride polymer was mixed with 800 g of the polyether polyol employed in Example 1 and then continuously recycled through a Gifford-Wood colloid mill, operating at 10,000 rpm with a clearance of 0.004 inch (0.1 mm) for five minutes. The resulting dispersion was uniform, stable, and contained particles of a size much like those of Example 1.

Example 3

Three similar sequentially polymerized vinylidene chloride polymer powders, which differed only in the amount of non-vinylidene chloride monomer used in the sequential stage, were prepared according to the following recipe and technique:

The polymerization described in Example 2 was repeated, but the sodium bisulfite was not added after the mixed monomer stream was shut off. Instead, the polymerization was permitted to continue until the pressure in the reactor leveled off and then the reactor was evacuated to reduce the concentration of residual vinylidene chloride monomer. Therafter, the desired amount of the non-vinylidene chloride monomer feed, consisting of 96 percent methyl methacrylate (MMA) and 4 percent 1,3-butylene glycol dimethacrylate (BGDM) crosslinking monomer, was added continuously over a 45 minute period.

The reaction was then permitted to continue for three hours after which the reactor was again evacuated to reduce residual monomer.

The so-formed latices, wherein the polymers respectively contained, 5 percent, 10 percent, and 20 percent non-vinylidene chloride polymer based on the weight of the VDC/MA polymer prepared in the first stage, were aged for seven days (85 percent of latex particles crystallized) and then recovered by the procedure described in Example 2.

Example 4

Various polymer/polyol dispersions in accordance with the present invention were prepared by admixing in an Eppenbach shear homogenizer a suitable amount of polyol with each of the vinylidene chloride polymer powders obtained in Examples 2 and 3. Each dispersion contained 20 percent of the respective polymer powder. Each of the dispersions was then passed twice through a water-cooled Gifford-Wood colloid mill having a 2 inch (5 cm) diameter rotor operating at 10,000 rpm. In the first pass a gap setting of 0.020 inch (0.5 mm) was used and in the second pass a gap setting of 0.004 inch (0.1 mm) was used. It was noted that the dispersions containing the polymers of Example 3 had considerably greater viscosity than the dispersion containing the polymer of Example 2, and that viscosity increased with the amount of non-vinylidene chloride polymer used.

The dispersions were then stored for one month and then examined for dispersion stability. The dispersion containing the polymer of Example 2 showed no signs of sedimentation and the dispersions containing the polymers of Example 3 showed visible, but minimal, sediment. This may have been due to the inherently larger size of the latex particles obtained in Example 3. Nevertheless, all of the dispersions appeared to be suitable for use in the preparation of polyurethane materials.

Example 5

Polyurethane foam samples were prepared with two of the polymer/polyol dispersions of Example 4 according to the following recipe:

| Ingredient | Amount (Grams) |
| --- | --- |
| Polyol | 490.0 |
| Polymer/polyol dispersion | 210.0 |
| Non-hydrolyzable silicone surfactant | 14.0 |
| Solution of 33% triethylene diamine in dipropylene glycol | 2.1 |
| Solution of 70% bis(N,N-dimethylaminoethyl)ether in dipropylene glycol | 0.7 |
| Solution of 26% 1,4-dimethylpiperazine and 75% bis(2-morpholine-ethyl)ether | 1.75 |
| Dibutyl tin dilaurate | 0.049 |
| Isophorone diamine | 4.2 |
| Water | 17.5 |

A mold, having dimensions of 15.5×15.5×4.5 inches (39×39×11.4 cm), and cover therefore were first preheated to 88°C. After applying a mold release agent to the interior surfaces of the mold and cover, they were allowed to cool to about 54° to 60°C.

The above-identified ingredients were then mixed in a high-speed blender operating at about 1800

7

to 2400 rpm for about 20 seconds. Thereafter, 231 g of a 90/10 mixture of toluene diisocyanate/poly-methylene polyphenylisocyanate was added and the mixture was further blended for about 3 to 3.5 seconds. The resulting mixture was poured into the mold, the cover was secured, and the mold was placed in a 121°C oven for eight minutes. After eight minutes, the resulting foam pad was removed from the mold, crushed, and then cured at 121°C for 30 minutes.

After aging the foams for seven days at room temperatuve they were tested for physical properties according to ASTM-D-1564 and ASTM-D-2406. The results of these tests are shown in Table I, wherein samples 5A and 5B identify foams prepared from the polymer/polyol dispersions containing, respectively, the powder prepared in Example 2 and the powder prepared in Example 3 having a 10 weight percent "cap". Both foams passed the Department of Transportation Motor Vehicle Safety Standard No. 302, indicating the flame-retardancy of such materials. Sample 5B had slightly reduced load-bearing properties but less discoloration than Sample 5A. Accordingly, these effects can be balanced to obtain the particular results desired by a user.

TABLE I

| Physical Property | 5A | 5B |
|---|---|---|
| Density—lb/cubic ft (g/l) | 2.82 (45.17) | 2.79 (44.69) |
| Tensile—psi (kg/sq cm) | 22.3 (1.56) | 19.4 (1.36) |
| Elongation (%) | 164 | 134 |
| Tear—inch (cm) | 2.37 (6.02) | 2.20 (5.59) |
| Compression Set | | |
| 75% CN | 9.6 | 8.7 |
| 75% CT | 7.3 | 6.7 |
| Humid Age | | |
| 50% CLD | 29.4 | 27.3 |
| 50% SET | 15.9 | 13.3 |
| ILD—lb/50 sq in (g/sq cm) | | |
| 25% | 37.5 (52.88) | 44.9 (63.31) |
| 65% | 99.1 (139.73) | 97.7 (137.76) |
| Return 25% | 31.2 | 36.9 |
| % Hystersis return | 83 | 82 |
| Modulus | 2.65 | 2.18 |

Example 6

In accordance with the present invention, a "capped" crystalline polymer powder, which is suitably incorporated into a polymer/polyol dispersion for use in the preparation of polyurethane foam materials, was prepared according to the following recipe and technique:

Initial water phase
    3200 g distilled water
    18.2 g dihexyl sodium sulfosuccinate 80 emulsifier
    10.6 g sodium persulfate
    19.88 g itaconic acid

Seed latex monomer
    500 g VDC
    2.5 g IRGANOX® 1076 stabilizer
    Used 150 g in seed latex reaction

Monomers
Stage I
    4000 g VDC
    20 g IRGANOX® 1076 stabilizer
    Used 2500 g in 12 hours (feed rate=208 g/hr)

Stage II
    500 g MA
    Used 132.8 g in 2 hours (feed rate=66.4 g/hr)

Stage III
    600 g MMA
    24 g BGDM
    Used 256 g in 4 hours (feed rate=66.4 g/hr)

Emulsifier feed stream

88.2 g $C_{12}H_{25}C_{12}H_7O(SO_3Na)_2$ emulsifier (45% active) in 750 g aqueous solution
Used 500 g in 12 hours (feed rate=42 g/hr)

The initial water phase was introduced into a 2-gallon (7.6 liter) reactor and placed under a vacuum of about 25 inches (63.5 cm) Hg for 10 minutes while being heated to 52°C. While agitating the contents of the reactor at 100 rpm, the vacuum was then shut off and 150 g of the seed latex monomer was introduced. After the seed latex reaction had proceeded to approximately a 2 psi (0.141 kg/sq cm) pressure drop from the maximum pressure achieved, introduction of the Stage I monomer at 208 g/hr was begun and continued for 12 hours while concurrently adding the emulsifier stream at a rate of 42 g/hr. At the end of that period, the Stage I monomer and emulsifier stream were shut off. 15 Minutes after the end of the Stage I monomer and emulsifier stream addition, introduction of the Stage II monomer at 66.4 g/hr was begun and continued for two hours. At the end of that period, the Stage II monomer stream was shut off and the Stage III monomer was introduced at 64 g/hr for four hours.

The resultant latex was aged for four days at room temperature (84 percent of latex particles crystallized) and then recovered by the following technique: 30 ml of 32 percent calcium chloride was added to 800 ml of water and heated to 50°C with vigorous stirring. The latex was then added slowly while continuing the vigorous agitation. As soon as some growth of coagulated particles were observed, the mixture was cooled as rapidly as possible and the coagulum collected in a centrifuge. The coagulum was washed 10 minutes with a water spray and then allowed to dry in a tray at room temperature.

Example 7

Vinylidene chloride polymer latexes at two particle sizes were prepared from a 95/5 VDC/MA mixture in a manner similar to that of Example 1. The latex particle size was controlled by varying the amount of emulsifier. The number of particles (percent) which crystallized as a function of latex age was determined by transmission electron microscopy. The results, as shown in Table II, demonstrate that at a given composition the rate of development of crystalline particles varies with latex particle size.

TABLE II
Percent Crystalline Particles

| Latex Age (days) | 130 nm Particles | 213 nm Particles |
|---|---|---|
| 0 | 38 | 38 |
| 1 | 58 | 86 |
| 2 | 72 | 92 |
| 4 | 88 | 95 |
| 8 | 94 | 100 |
| 12 | 98 | 100 |

After various aging periods, samples of the latex containing the 213 nm particles were coagulated at 50°C and dried in the same manner as in Example 1. 20 Weight percent of each of the resulting powders were mixed with a polyol having a room temperature viscosity of 900 to 1000 MPa.s and the mixture was passed once through a Gifford-Wood colloid mill operating at 10,000 rpm with a gap setting of 0.004 inch (0.1 mm) and then twice through a Gaulin homogenizer operating at 5000 psi (350 kg/sq cm).

Table III summarizes the microscopy evaluation of the dispersions as a function of latex age and relative number of crystalline particles. It is noted that the particles in the latex containing 38 percent crystalline particles underwent extensive irreversible coalescence during coagulation and that the coagulated particles did not redisperse in the polyol. As the number of crystalline particles increased above 50 percent, however, the extent of irreversible coalescence upon chemical coagulation decreased and the ability to redisperse the powder in an organic non-solvent increased. For example, at 86 percent crystalline latex particles minimal irreversible coalescence occurred and the powder redispersed such that more than 40 percent of the particles in the dispersion were of the original latex particle size and essentially all of the particles were of a size less than 100 $\mu$m.

TABLE III

| Latex Age | Percent Crystalline Particles | Sedimentation Time | % Settled | Approximate Percent of Original Latex Particles in Dispersion | Maximum Diameter of Undispersed Agglomerates $\mu$m |
|---|---|---|---|---|---|
| Fresh | 38 | 1 day | 95 | none | >1000 |
| 1 day | 86 | 1 month | trace | 50—75 | 20 |
| 4 days | 95 | 1 month | trace | 50—75 | 60 |
| 6 days | 100 | 1 month | 40 | 20—30 | 500 |

Example 8
Initial water phase
    2500 g distilled water
    16.56 g dihexyl sodium sulfosuccinate
    10.6 g sodium persulfate
    19.88 g itaconic acid

Seed latex monomer
    20 g butyl acrylate (four parts)
    480 g vinylidene chloride
    Used 150 g in seed latex reaction

Mixed monomers
    3640 g vinylidene chloride
    360 g butyl acrylate (nine parts)
    Used 2500 g in 12 hours (feed rate=208 g/hr)

The initial water phase was introduced into a 2-gallon (7.6 liter) reactor and placed under a vacuum of about 25 inches (63.5 cm) Hg for 10 minutes while being heated to 52°C with agitation at 120 rpm. When the reactor contents had reached a temperature of 52°C, the vacuum was shut off and 150 grams of seed latex monomer was added. After the seed latex reaction has proceeded to a 2 psi (0.141 kg/sq cm) pressure drop from maximum pressure achieved, the mixed monomer stream was introduced at 208 g/hr and continued for 12 hours. At the end of that period, the mixed monomer stream was shut off and a 2 percent solution of sodium bisulfite was added at 40 g/hr for two hours to complete the reaction.

The resulting latex contained a polymer comprising 91 percent VDC and 9 percent butyl acrylate with a seed latex composition of 96 percent VDC and 4 percent butyl acrylate which was 87 percent crystalline within seven days.

Example 9
Batch emulsion polymerization
Initial reactor charge
    1750 g distilled water
    5 g alkyl benzene sulfonate emulsifier
    0.13 g sodium formaldehyde sulfoxylate
    0.93 g 30 percent hydrogen peroxide
    800 g vinylidene chloride
    200 g vinyl chloride

Aqueous feed stream
    500 g distilled water
    0.7 g sodium formaldehyde sulfoxylate
    10 g alkyl benzene sulfonate emulsifier

The initial water, emulsifier and reducing agent was introduced into a 3-liter reactor with agitation at 300 rpm. While heating the contents of the reactor to the polymerization temperature of 45°C, the reactor was evacuated to 28 inches (71 cm) Hg. When the contents of the reactor reached 45°C, the vacuum was shut off and the mixed monomers and initial shot of hydrogen peroxide were introduced into the reactor. Addition of the aqueous stream was started at 43 g/hr two hours after addition of the mixed monomers and peroxide. Approximately seven hours later, the polymerization was completed and at a 15 psi (1.05 kg/sq cm) pressure drop, the aqueous stream was shut off and the reactor was cooled to room temperature.

The resulting latex contained a polymer comprising 80 percent VDC and 20 percent vinyl chloride, which was 94 percent crystalline within seven days.

**Claims**

1. A process for preparing a crystalline vinylidene chloride polymer powder which is dispersible in liquid organic reactants used in the preparation of polymeric materials, which comprises emulsion polymerizing of from 80 to 100 parts by weight of vinylidene chloride and 20 to 0 parts by weight of at least one copolymerizable ethylenically unsaturated monomer to prepare a latex wherein the latex particles have a diameter of less than 1 $\mu$m, aging the resulting latex until at least 75 percent of the latex particles are crystallized, and then recovering the polymer from the latex.

2. Process of Claim 1 which comprises emulsion polymerizing the vinylidene chloride with at least one alkyl or hydroxyalkyl ester of acrylic or methacrylic acid, a vinyl ester of a saturated carboxylic acid, an amide or nitrile of an ethylenically unsaturated carboxylic acid, an ethylenically unsaturated carboxylic acid or alcohol or a vinyl halide.

3. Process of Claim 2 which comprises emulsion polymerizing from 94 to 97 parts by weight of vinylidene chloride with from 6 to 3 parts by weight of methyl acrylate.

4. Process of any one of Claims 1 to 3, wherein the latex particles are crystallized within an aging period of seven days at 25° to 30°C.

5. Process of any one of Claims 1 to 4, wherein up to 20 weight percent of a sequentially polymerizable monomer mixture comprising an ethylenically unsaturated non-vinylidene chloride monomer is added to the latex and the monomer mixture polymerized.

6. Process of Claim 5 wherein the monomer mixture is added after the latex has been aged.

7. Process of Claim 6 wherein the non-vinylidene chloride monomer is methyl methacrylate.

8. Process of Claim 6 or 7 wherein the polymer resulting from the polymerization of the sequentially polymerizable monomer has a second order transition temperature of at least 60°C.

9. Composition comprising a crystalline vinylidene chloride polymer powder prepared according to the process of any one of Claims 1 to 8 dispersed in a liquid organic reactant which is used in the preparation of polymeric materials.

10. Composition of Claim 9 wherein the liquid organic reactant is a polyol.

**Patentansprüche**

1. Verfahren zur Herstellung eines kristallinen Polyvinylidenchlorid-Pulvers, das in flüssigen organischen Reaktionspartnern, die bei der Herstellung von polymeren Materialien verwendet werden, dispergierbar ist, dadurch gekennzeichnet, daß man 80 bis 100 Gew.-Teile Vinylidenchlorid und 20 bis 0 Gew.-Teile von mindestens einem copolymerisierbaren, äthylenisch ungesättigten Monomeren einer Emulsionspolymerisation unterwirft unter Bildung eines Latex, in dem die Latexteilchen einen Durchmesser von weniger als 1 $\mu$m besitzen, den erhaltenen Latex altert, bis mindestens 75% der Laterpartikel in kristalliner Form vorliegen, und dann das Polymer aus dem Latex isoliert.

2. Verfahren nach Anspruch 1, dadurch gekennzeichnet, daß man des Vinylidenchlorid mit mindestens einem Alkyloder Hydroxyalkylester von Acrylsäure oder Methacrylsäure, einem Vinylester einer gesättigten Carbonsäure, einem Amid oder Nitril einer äthylenisch ungesättigten Carbonsäure, einer äthylenisch ungesättigten Carbonsäure oder Alkohol, oder einem Vinylhalogenid emulsionspolymerisiert.

3. Verfahren nach Anspruch 2, dadurch gekennzeichnet, daß man 94 bis 97 Gew.-Teile Vinylidenchlorid mit 6 bis 3 Gew.-Teilen Methylacrylate emulsionspolymerisiert.

4. Verfahren nach einem der Ansprüche 1 bis 3, dadurch gekennzeichnet, daß die Latexpartikel innerhalb einer Alterungsperiode von 7 Tagen bei 25 bis 30°C kristallisiert werden.

5. Verfahren nach einem der Ansprüche 1 bis 4, dadurch gekennzeichnet, daß bis zu 20 Gew.% einer nachfolgend polymerisierbaren, ein äthylenisch ungesättigtes, von Vinylidenchlorid verschiedenes Monomer enthaltende Monomerenmischung zum Latex zugefügt wird und die Monomerenmischung polymerisiert wird.

6. Verfahren nach Anspruch 5, dadurch gekennzeichnet, daß die Monomerenmischung nach der Alterung des Latex zugefügt wird.

7. Verfahren nach Anspruch 6, dadurch gekennzeichnet, daß das von Vinylidenchlorid verschiedene Monomere Methylmethacrylat ist.

8. Verfahren nach Anspruch 6 oder 7, dadurch gekennzeichnet, daß das durch Polymerisation das nachfolgend polymerisierbaren Monomeren erhaltene Polymere eine Übergangstemperatur zweiter Ordnung von mindestens 60°C hat.

9. Zusammensetzung enthaltend ein nach dem Verfahren von einem der Ansprüche 1 bis 8 hergestelltes Polyvinylidenchlorid-Pulver, das in einem flüssigen organischen Reaktionspartner, welcher zur Herstellung von polymeren Materialien verwendet wird, dispergiert ist.

10. Zusammensetzung nach Anspruch 9, dadurch gekennzeichnet, daß der flüssige organische Reaktionspartner ein Polyol ist.

**Revendications**

1. Procédé de préparation d'une poudre cristalline de polymères de chlorure de vinylidène, qui est dispersable dans des réactifs organiques liquides utilisés dans la préparation de matières polymères, qui comprend la polymérisation en émulsion de 80 à 100 parties en poids de chlorure de vinylidène et de 20 à 0 parties en poids d'au moins un monomère éthyléniquement insaturé copolymérisable, pour préparer un latex dans lequel les particules de latex ont un diamètre inférieur à 1 μm; le vieillissement du latex résultant jusqu'à ce qu'au moints 75% des particules de latex soient cristallisées, puis la récupération du polymère à partir du latex.

2. Procédé selon la revendication 1, qui comprend la polymérisation en émulsion du chlorure de vinylidène avec au moins au alkyl ou un hydroxyalkylester d'acide acrylique ou méthacrylique, un ester vinylique d'un acide carboxylique saturé, un amide ou un nitrile d'un acide carboxylique éthyléniquement insaturé, un acide carboxylique ou un alcool, éthyléniquement insaturés, ou un halogénure de vinyle.

3. Procédé selon la revendication 2, qui comprend la polymérisation en émulsion de 94 à 97 parties en poids de chlorure de vinylidène avec de 6 à 3 parties en poids d'acrylate de méthyle.

4. Procédé selon l'une quelconque des revendications 1 à 3, dans lequel les particules de latex sont cristallisées pendant une période de vieillissement de 7 jours à 25°C—30°C.

5. Procédé selon l'une quelconque des revendications 1 à 4 dans lequel jusqu'à 20% en poids d'un mélange de monomères polymérisables de façon séquentielle comprenant un monomère non-chlorure vinylidénique, éthyléniquement insaturé, sont ajoutés au latex et au mélange de monomères, polymérisé.

6. Procédé selon la revendication 5, dans lequel le mélange de monomère est ajouté une fois que le latex a été vieilli.

7. Procédé selon la revendication 6, dans lequel le monomère non-chlorure vinylidénique est le méthacrylate de méthyle.

8. Procédé selon la revendication 6 ou 7, dans lequel le polymère résultant de la polymérisation du monomère polymérisable d'une façon séquentielle a une température de transition du second ordre d'au moins 60°C.

9. Composition comprenant une poudre cristalline de polymères de chlorure de vinylidène, préparée selon de procédé décrit dans l'une quelconque des revendications 1 à 8, dispersée dans un réactif organique liquide qui est utilisé dans la préparation de matières polymères.

10. Composition selon la revendication 9, dans laquelle le réactif organique liquide est un polyol.

12